# EUROPEAN PATENT APPLICATION

(11) **EP 4 321 912 A1**
(43) Date of publication of application: **14.02.2024**
(21) Application number: 22189609.5
(22) Date of filing: 09.08.2022
(51) Int. Cl.: G02B 6/44

(54) **OPTICAL FIBER TERMINATION ENCLOSURES**

(71) Applicant: Keltech Network Innovations Limited, D2 Dublin (IE)
(72) Inventor: Botha, Jacob, Dublin (IE); Kellett, Mark, Dublin (IE)
(74) Representative: FRKelly

(57) **Abstract**

An optical fiber termination enclosure provides a housing accommodating components adapted to terminate, connect, splice and/or split optical fiber connections. An adapter panel has a plurality of optical fiber connectors which each provide at least one optical connection between an external optical fiber mated to an external coupler of the connector and an internal optical fiber jumper cable mated to an internal coupler. The adapter panel has an optical fiber connector mounting rail structure with at least one rail upon which the plurality of optical fiber connectors are slidably mounted in a side-by-side arrangement. This permits individual connectors to be moved along the at least one rail to reveal spaces between adjacent connectors and thereby provide improved access to individual connectors.

## Description

### Technical Field

This invention relates to optical fiber termination enclosures for routing and terminating optical fiber cables, including hybrid power and fiber cables.

Termination, as used herein, encompasses connections, terminations, splices, and splits. As used herein, hybrid power and fiber cables denote cables of the type also known as "hybrid copper and fiber", i.e., having one or more optical fibers and powered conductors carried together in a common sheath.

While the powered conductors may be referred to as "copper", it is to be understood that this is a term of art that denotes an electrical conductor and may include conductors of materials other than copper.

### Background Art

Fiber termination panels are used predominantly in local and wide area optical networks to cross-connect jumper cables and proved a rendezvous point for the ease of distribution.

The higher demand for fiber optic systems has increased the demand for improved space requirements with termination endpoints. There is a need for higher density termination panels and enhanced cable management. Higher density termination equipment in turn is more challenging for the installer or maintenance technician who will typically have to manipulate and connect greater numbers of optical fibers within a given space.

Optical fiber networks require terminating equipment, adaptor panels, distribution boxes, and so on which may need to be installed in inaccessible locations or data centres. Such equipment often involves power, and traditionally this has meant that installation of optical fiber network equipment must include the provision of electrical mains connection, often requiring coordination between different utility providers. Furthermore, power failures may be outside the network operator's control and may not be remediable by the network operator. As a result, there is a need for hybrid power and fiber cables, which is a growing technology.

One drawback to this technology is that the terminating enclosures must accommodate both powered components and components of the optical fiber system and tend to become bulky and more expensive.

Furthermore, they become more challenging to install and service as they become more complicated internally. There is a need for improved enclosures that are less expensive to manufacture, easier to install and maintain, and less bulky than conventional enclosures. For optical fiber terminations in particular, whether in the case of hybrid power and fiber cables or for conventional optical fiber cables, there is also a need for improved routing within a 2-termination enclosure that is less bulky, easier to install and service, and which provides a high degree of protection for the fibers.

### Disclosure of the Invention

There is provided an optical fiber termination enclosure, comprising:
a housing defining an internal space for accommodating a plurality of termination components adapted to terminate, connect, splice and/or split optical fiber connections received at said enclosure; and
an adapter panel comprising a plurality of optical fiber connectors which each provide at least one optical connection between a respective external coupler and a respective internal coupler, whereby an external optical fiber may be mated to said external coupler and an internal optical fiber jumper cable having first and second ends may be mated to said internal coupler at the first end and to one of the termination components within the housing at the second end;
wherein the adapter panel comprises an optical fiber connector mounting rail structure having at least one rail upon which the plurality of optical fiber connectors are slidably mounted in a side-by-side arrangement, such that individual connectors may be moved along the at least one rail to reveal spaces between adjacent connectors and thereby provide improved access to individual connectors.

The enclosure of the present invention addresses the problems discussed above by providing a bank or array of connectors to which the external optical fibers may connect, with the connectors being slidably mounted on rails to move a selected connector apart from its neighbour and thereby increase the immediate space around the connector making it easier to work on that connector, without requiring all of the connectors to be spaced apart from one another by such a distance which would reduce the density of connectors considerably. Conventional enclosures have fixed arrays of connectors, which may have spacing built in to the array to allow access to and work on individual connectors, but this means that considerably greater space is needed since every pair of adjacent connectors requires a space, whereas in the present case, the space can be dynamically created around any given connector by sliding its neighbour(s) away from it.

Preferably the optical fiber connectors have height, a width and a depth, with the depth being defined by the direction from a front side to a rear side, wherein said external coupler is accessed from the front side and said internal coupler is accessed from the rear side; wherein the height is at least 1.5 times the width; and wherein the side-by-side arrangement of the connectors forms an array of connectors extending along the width axis.

This arrangement, with the connectors oriented upright, with their longer height dimension perpendicular to the width of the array, results in a very advantageous space saving.

Further, preferably, the height is at least 2 times, more preferably 2.5 times, and even more preferably 3 times the width.

Preferably, the at least one rail has a cross-section that is complementary to a formation provided on each optical fiber connector, to enable the slidable mounting of the optical fiber connectors on the rail along the optical fiber connector mounting rail structure.

The at least one rail may preferably have a generally U-shaped (square or round) channel whose opening faces towards the optical fiber connectors.

The connectors are preferably provided with a flange extending from the top or bottom which fits slidably within the channel.

In preferred embodiments, the optical fiber connectors can be slid onto and off the rail, allowing different kinds of connector and/or different numbers of connector to be installed using a common mounting formation on the connectors to slide onto and along the rails.

Preferably, the optical fiber connector mounting rail structure of the adapter panel comprises a pair of spaced-apart top and bottom rails, and wherein the optical fiber connectors are provided with top and bottom formations which are complementary to the cross-sections of the top and bottom rails, respectively.

For example, the optical fiber connector mounting rail structure may take the form of a fence or gate with top and bottom rails spaced apart and held together by one or more connecting struts.

Where each rail has a channel as described above, the channels may face one another and the connectors may have top and bottom flanges each sliding along a respective rail channel.

Preferably, the optical fiber connector mounting rail structure defines a length within which the optical fiber connectors are accommodated and are free to slide, and wherein the combined width of the optical fiber connectors mounted side-by-side along the at least one rail is less than said length, thereby providing a free space along the at least one rail to enable separation between any two adjacent optical fiber connectors by sliding them apart.

Depending on how much space a technician may need to work with, and the configuration of a particular type of connector, the amount of free space required can be adjusted by using more or fewer connectors within a given length.

Further, preferably, the combined width of the optical fiber connectors mounted side-by-side along the at least one rail is less than said length by an amount at least equal to the width of a single optical fiber connector.

Preferably, the adapter panel comprises a plurality of arrays of optical fiber connectors, each array of optical fiber connectors being mounted on a respective optical fiber connector mounting rail structure, and the respective optical fiber connector mounting rail structures being disposed with their respective rails aligned end-to-end.

The skilled person will appreciate that by providing individual arrays of connectors, each with their own mounting rail structure, it is possible to change the configuration of connectors in the adapter panel.

Preferably, the optical fiber connector mounting rail structures of adjacent arrays are provided with co-operating interconnections, such that a pair of said optical fiber connector mounting rail structures may be mounted end-to-end to form larger arrays of optical connectors in a modular fashion.

In preferred embodiments, the adjacent rail structures lock one another into place.

Preferably, the or each optical fiber connector mounting rail structure is removably mounted in the enclosure to permit removal and replacement thereof.

In preferred embodiments, the adapter panel further comprises a plurality of electrical connectors which each provide at least one electrical connection between a respective external terminal and a respective internal terminal, whereby an external electrical conductor may be mated to said external terminal and an electrical jumper lead having first and second ends may be mated to said internal terminal at the first end and to an electrical termination component within the housing at the second end.

It will be appreciated that this opens the possibility of the adapter panel accommodating power and fiber, most usually in the form of hybrid fiber and copper cables, but also where the electrical conductors are routed to the enclosure separately from the optical fibers.

It will also be appreciated that in the modular design discussed above, the number of optical fiber connectors and the number of electrical connectors can be customised to match the requirements of a particular application.

Preferably, the adapter panel comprises at least one electrical connector mounting rail structure having at least one rail upon which the plurality of electrical connectors are slidably mounted in a side-by-side arrangement, such that individual connectors may be moved along the at least one rail to reveal spaces between adjacent connectors and thereby provide improved access to individual connectors.

From this it can be seen that the optical fiber mounting rail structure and the electrical connector mounting rail structure may be designed along similar principles, allowing a technician to slide each kind of connector apart from its neighbours, and allowing a modular, customised mix of mounting rail structures in a particular enclosure.

Accordingly, the electrical connector mounting rail structures and electrical connectors may benefit from similar features as previously discussed for the optical connections, such as:
- wherein said optical fiber connector mounting rail structure and said electrical connector mounting rail structure are mounted in the enclosure in an aligned end-to-end arrangement to form an array of optical fiber connectors and electrical connectors adapted to accommodate hybrid optical-electrical cables received at the enclosure.
- wherein the at least one rail of the electrical connector mounting rail structure has a cross-section that is complementary to a formation provided on each electrical connector, to enable the slidable mounting of the electrical connectors on the rail along the electrical connector mounting rail structure.
- wherein the electrical connector mounting rail structure of the adapter panel comprises a pair of spaced-apart top and bottom rails, and wherein the electrical connectors are provided with top and bottom formations which are complementary to the cross-sections of the top and bottom rails, respectively.
- wherein the electrical connector mounting rail structure defines a length within which the electrical connectors are accommodated and are free to slide, and wherein the combined width of the electrical connectors mounted side-by-side along the at least one rail is less than said length, thereby providing a free space along the at least one rail to enable separation between any two adjacent electrical connectors by sliding them apart.
- wherein the combined width of the electrical connectors mounted side-by-side along the at least one rail is less than said length by an amount at least equal to the width of a single electrical connector.
- wherein the adapter panel comprises a plurality of arrays of electrical connectors, each array of electrical connectors being mounted on a respective electrical connector mounting rail structure, and the respective electrical connector mounting rail structures being disposed with their respective rails aligned end-to-end.
- wherein the electrical connector mounting rail structures of adjacent arrays are provided with co-operating interconnections, such that a pair of said electrical connector mounting rail structures may be mounted end-to-end to form larger arrays of electrical connectors in a modular fashion.
- wherein the or each electrical connector mounting rail structure is removably mounted in the enclosure to permit removal and replacement thereof.

Preferably, the enclosure further includes one or more mounting structures to which said optical fiber connector mounting rail structure(s) and said electrical connector mounting rail structures can interchangeably mount.

Such mounting structures can be provided on any suitable part of the enclosure or the housing. A preferred implementation has the mounting structures carrying the adapter panel provided on a tray that is moveable relative to the enclosure itself, the tray also carrying the termination components.

In some embodiments, at least one of said optical fiber connectors is provided with a plurality of communicating pairs of external and internal couplers to thereby facilitate the connection of a plurality of external optical fibers with a plurality of optical fiber jumper cables.

Furthermore in some embodiments, at least one of said electrical connectors is provided with a plurality of communicating pairs of external and internal terminals to thereby facilitate the connection of a plurality of external electrical conductors with a plurality of internal electrical jumper leads.

Preferably, said enclosure has a front wall, and said adapter panel is disposed internally of the enclosure behind said front wall and spaced apart therefrom to define a routing space which is adapted to accommodate portions of said external optical fibers adjacent to the terminal ends mated to the external couplers.

The routing space in front of the adapter panel and behind the front wall provides a storage space facilitating the user who has to make the connections to the adapter panel, so that a length of fiber and/or electrical conductor can be accommodated inside the enclosure prior to the coupling to the optical fiber or electrical connectors, and giving greater latitude in the installation.

The enclosure preferably further comprises a display provided at said front wall, the display communicating with and providing information relating to the operation of components mounted within said enclosure.

Such a display provides a useful indication of the internal state of the enclosure or of the data or electrical signals which are brought into the enclosure, allowing a user to understand the operation of the system without having to physically open and examine it.

Preferably, the enclosure further comprises a first cable port adapted to receive an optical fiber cable containing said external optical fibers bundled together, optionally in the form of a hybrid cable containing said external optical fibers and electrical conductors.

Preferably, the enclosure has a routing structure providing a routing path from said ingress port to said external couplers of said adapter panel.

Preferably, the enclosure further comprises a second cable port adapted to receive a further optical fiber cable containing a bundle of optical fibers which are connected directly or indirectly to said termination components.

In preferred embodiments, the termination components and the adapter panel are mounted on a tray which is moveably accommodated within the housing of the enclosure.

Preferably, the tray is pivotally mounted to the housing, permitting it to be rotated away from the housing to facilitate access to the adapter panel for installation or maintenance, and permitting it to be rotated back into and enclosed within the housing for normal operation.

Alternatively, the tray may be slidably received in the housing allowing it to be slid out of the housing to facilitate access to the adapter panel for installation or maintenance, and permitting it to be slid back into and enclosed within the housing for normal operation.

### Brief Description of the Drawings

Fig. 1 is a front perspective view from above of an optical fiber termination enclosure shown with the tray in a closed position prior to installation of any optical fiber or electrical conductors;
Fig. 2 is a front perspective view similar to Fig. 1 but with the tray in an open position;
Fig. 3A is a front perspective view similar to Fig. 1 showing the routing of some optical fiber and electrical conductors;
Fig. 3B is a perspective view of the arrays of optical fiber connectors and electrical connectors of the optical fiber termination enclosure of Fig. 3, mounted on respective rail structures, shown isolated from the rest of the enclosure;
Fig. 3C is an end perspective view of a detail of the optical fiber connector mounting rail structure of Fig. 3B;
Fig. 3D is a perspective view of a detail of the electrical connector mounting rail structure of Fig. 3B;
Fig. 3E is an end elevation of the electrical connector mounting rail structure of Fig. 3B;
Fig. 4A is a top front perspective view of the tray of the optical fiber termination enclosure of Fig. 1;
Fig. 4B is a detail of the left side wall of the tray of Fig. 4A;
Fig. 4C is a detail of the base of the tray of Fig. 4A;
Fig. 4D is a detail of the right side wall of the tray of Fig. 4A;
Fig. 5A is a perspective view of the optical fiber connector rail mounting structures and electrical connector rail mounting structures, without the optical fiber connectors or electrical connectors mounted;
Fig. 5B is an end perspective view of a detail of the optical fiber connector mounting rail structure with a connector mounted, similar to Fig. 3B;
Fig. 5C is a detail of the attachment of the optical fiber rail mounting structure to the tray left side wall;
Fig. 5D is a perspective view of an optical fiber connector rail mounting structure and an electrical connector rail mounting structure showing the connection therebetween;
Fig. 6A is a left front perspective view from above of the optical fiber termination enclosure of Fig. 1;
Fig. 6B is a perspective view of a locking member to lock the rial system into the tray;
Fig. 6C is a perspective view of a detail of the right side wall of the tray with the locking member locking a rail structure in place;
Fig. 7A is a perspective view of a cable fixation system used in the optical fiber termination enclosure of Fig. 1;
Fig. 7 B is a perspective view of the isolated cable fixation system;
Fig. 7C is a perspective view of one plate of the cable fixation system;
Fig. 8A is a perspective view of a detail of the tray of the optical fiber termination enclosure of Fig. 1, showing the structure for fixing a splice bank;
Fig. 8B is a perspective view of a splice bank;
Fig. 8C is a perspective view of a detail of the optical fiber termination enclosure of Fig. 1, showing a single splice bank in place;
Fig. 8D is a perspective view of a detail of the optical fiber termination enclosure of Fig. 1, showing a high-density stack of splice banks in place;
Fig. 9A is a perspective view of the optical fiber termination enclosure of Fig. 1, showing part of the routing used by optical fibers and electrical conductors;
Fig 9B is a detail of the routing channels of the optical fiber termination enclosure of Fig. 1;
Fig. 9C is a cross-section through a hybrid fiber and copper cable which the optical fiber termination enclosure of Fig. 1 is adapted to terminate;
Fig. 10A is a perspective view of a lid for the optical fiber termination enclosure of Fig. 1;
Fig. 10B is a front elevation of the lid of Fig. 10A;
Fig. 11 is a perspective view of the enclosure showing partial routing paths for optical fibers;
Fig. 12 is a perspective view of the enclosure showing partial routing paths for electrical conductors; and
Fig. 13 is a perspective view of the enclosure showing partial internal routing paths to the splice bank and the PLC splitters.

### Detailed description of Preferred Embodiments

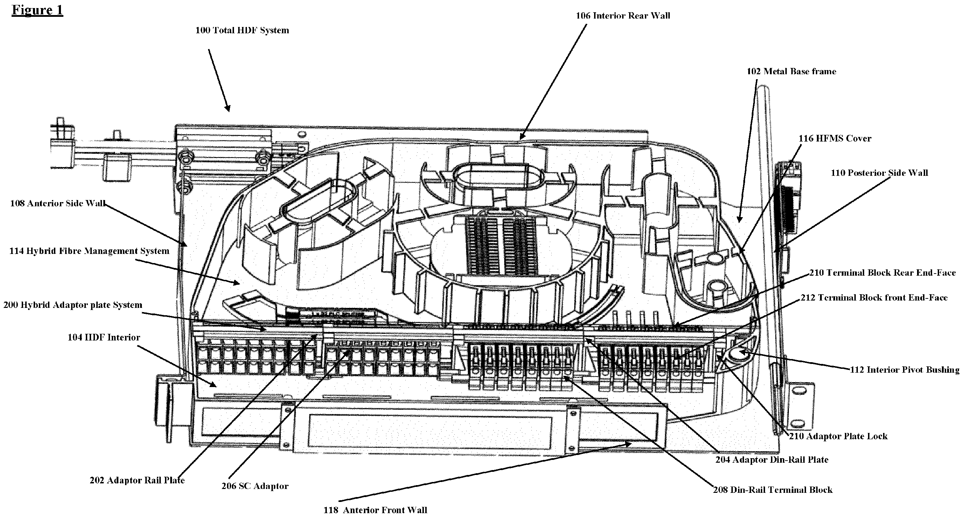

An optical fiber termination enclosure is indicated in Fig. 1 generally at 100. The optical fiber termination enclosure is also referred to herein as a hybrid distribution frame (HDF or HDF system), or a copper and fiber optic distribution panel. It is called a hybrid distribution frame because it is adapted to terminate and distribute hybrid (copper and fiber optic) cables, as described below.

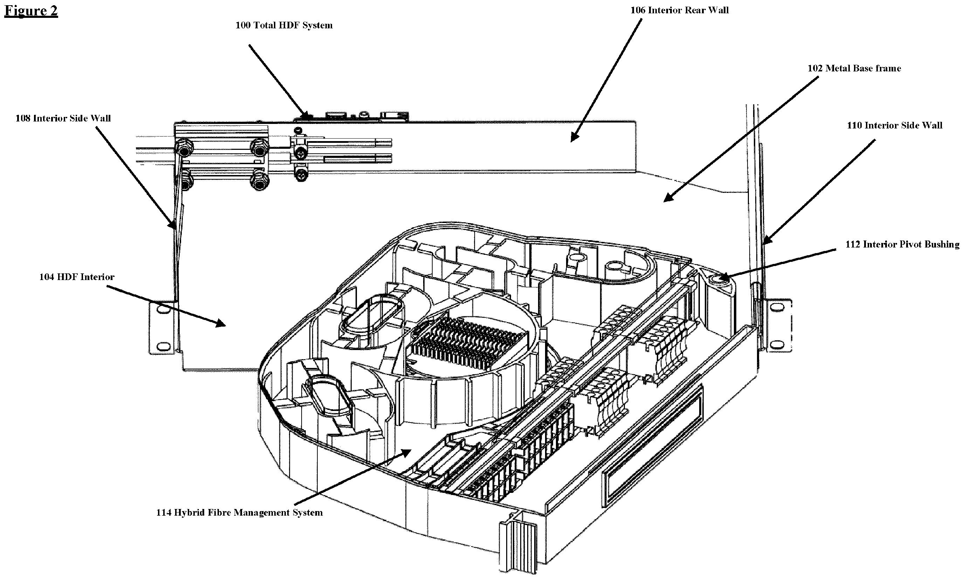

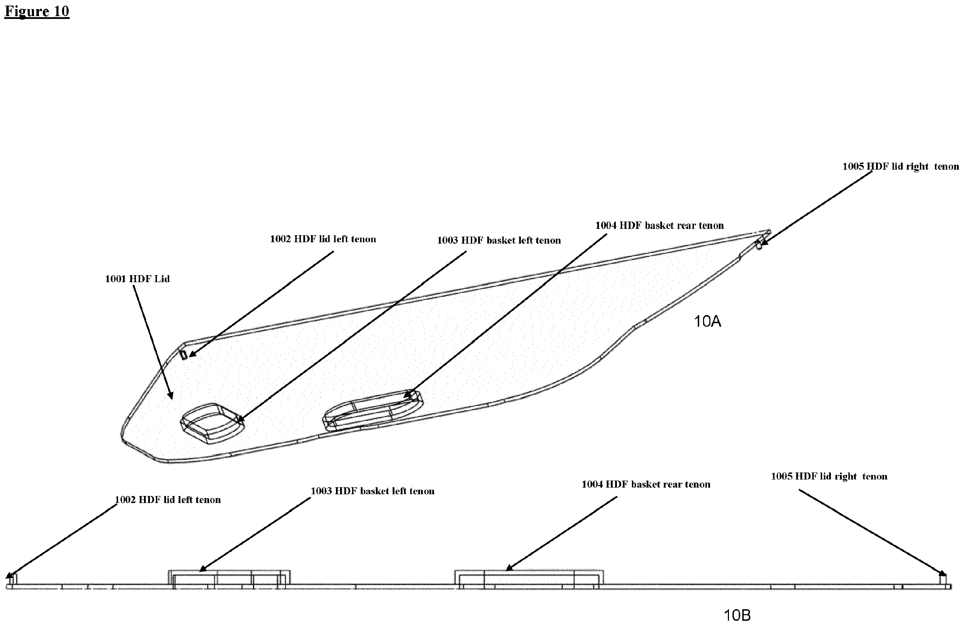

The hybrid distribution frame system **100** comprises a base frame **102** which may preferably be of metal (so that it can be grounded as it is mounted into a rack with grounding connections), with an interior void **104** defined by an interior rear wall **106** and two lateral side walls namely anterior side wall **108** and posterior side wall **110.** The hybrid distribution frame further includes an interior pivot bushing **112** on which is pivotally mounted a hybrid fiber management system **114** provided on a tray which can be pivoted out of the frame but Fig. 1 shows the tray in a closed position within the frame. When the hybrid distribution system 114 is pivoted to an open position (Fig. **2**), it creates the possibility to access the components contained within the hybrid fiber distribution system **114** from the top. A top layered cover **116** (not shown in Fig. 1, although the reference numeral 116 indicates the cover's positioning on top of the hybrid distribution system 114; the cover is shown in Figs. 10A & 10B) is snapped fitted into the tray 114 in use to protect the interior components (e.g. from foreign objects falling in, or from accidentally being touched).

Fig. 1 also shows components of an adapter panel, which is referred to also as a hybrid adaptor plate system **200,** and which interlocks with the hybrid fiber management system **114;** the adapter panel will be described in greater detail below.

In Fig. **2****,** the hybrid fiber management system **114** is shown having been rotated horizontally in a counter clockwise direction about the pivot busing112 to provide access from the top, both for servicing components and more especially for providing access to the adapter panel or hybrid adaptor plate system **200** during cable installation or re-routing. The hybrid fiber management system will swivel clockwise to close, as seen in Fig. **1****.**

The hybrid adaptor plate system **200** is a modular system where each part engages with another at the operative interior front end of the hybrid management system **114.**

The hybrid management system's **114** top layer cover **116** extends exclusively over the fiber termination area, i.e. it does not extend over the front side of the adapter plate system, so that a user can access the hybrid adaptor plate system **200** from a lateral front top end of the hybrid management system **114** without the requirement to swivel the hybrid management system open in a counter clockwise direction.

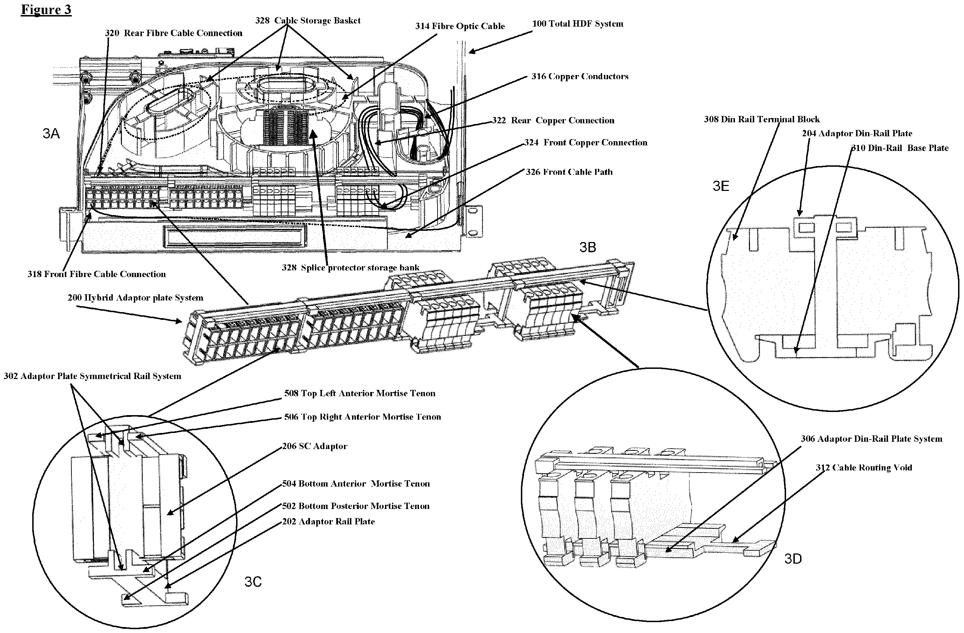

Referring additionally to Figs. 3A to 3E, the hybrid adaptor plate system **200** includes an adaptor rail plate **202** (also referred to herein as an optical fiber connector mounting rail structure) which accommodates flanged adaptors placed between top and bottom rails. The mounting rail structure is suitably sized for various optical fiber connector types (such as LC or SC, to give two non-limiting examples of common connection types) and forms a part of the adapter panel or hybrid adaptor plate system **200.**As best seen in Fig. 3B, the modular arrangement of optical fiber connector mounting rail structures in the adapter panel adaptor rail plate **202** groups together connectors in an array. In the illustrated embodiment there are two groups of nine optical fiber connectors, each group being on a respective optical fiber rail mounting structure, and these in turn are connected in modular fashion to two groups of six electrical connectors (eight in Fig. 1), each such group being mounted on a respective electrical connector rail mounting structure. While all of the connectors in each group are identical, different combinations of connector types can be used.

As seen best in Figs. 3C and 3D, the connectors are slidably mounted between top and bottom rails within a rail mounting structure (this being true for both the optical fiber connectors and the electrical connectors, though the details of the mounting are different in each case). The ability to slide adaptors along the rails enables a higher density of connectors whereby 144 fibers can be terminated within a 1U server rack space (the HDF system **100** as a whole being sized to a 1U height in the present embodiment). Adaptors are placed perpendicularly to the adaptor rail plate **202,** so that their long dimension (height) extends in the direction between top and bottom rails, while the short dimension (width) is the side-by-side direction along which an array of connectors is created when the connectors are mounted alongside one another in the rail mounting structure.

The ability of the connectors (both optical fiber and electrical) to slide along their respective mounting rails, combined with the fact that in each rail system there is a small gap i.e. the connectors' combined width is less than the available space along the rail for movement, means that the gap can be manipulated to any point along an array, allowing greater access to individual connectors without interference from the neighbouring connectors, and without having to space each connector apart as in known fixed arrangements.

As seen in Figs. 3B and 3C, the adaptor rail plate **202** comprises two parallel (top and bottom) symmetrical rails opposed to one another and with a fixed spacing between them, defining a central pathway corresponding in vertical size to the SC duplex adaptor 206. Each rail has a square U-shaped channel facing inwardly to accommodate a pair of flanges extending from the top and bottom of the optical fiber connectors.

Furthermore, encompassing the hybrid adaptor plate system **200** is an adaptor din-rail plate system **306** which is the mounting rail structure for the electrical connectors, seen best in Figs. 3B, 3D and 3E.

The adaptor din-rail plate system encompasses a din rail base plate **310** at the foundation of the adaptor din rail plate **202.** An array of electrical connectors in the form of din rail terminal block(s) **308** can be mounted vertically to the din-rail base plate **310;** the vertical convention of the terminal block(s) **308** on the din-rail base plate **310** offers a higher density of 12 terminations within a 1U server rack space.

Each of the fiber connectors is an SC duplex adaptor **206** which accommodates a front fiber cable connection **318** and a rear fiber cable connection **320** (Fig. 3A). The front-end cable connection **318** routes along an established front cable path **324,** and the rear fiber cable connection **320** will route through the cable storage basket(s) **328** to the splice protector storage bank **328.** The front copper connection **326** will route through the egress cable routing void **312** to the cable storage basket **328,** and the rear copper connection will route ingress through cable storage basket **328** to the hybrid adaptor plate system **200** connecting to the front copper connections at the din-rail terminal block **308.**

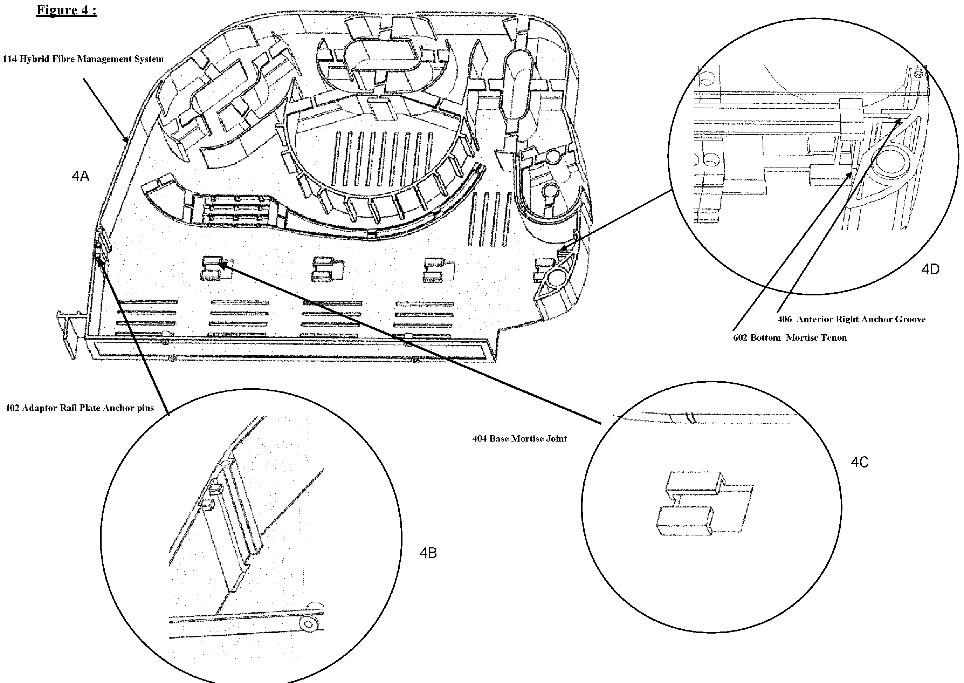

Figs. 4A and 4B show two adaptor array anchor pins **402** that are moulded into the hybrid fiber management system **114** on the left interior sidewall, this establishes the arrangement for the leftmost fiber connector rail mounting structure **202** to be anchored into hybrid fiber management system **114** left anterior sidewall. The rail mounting structures are secured on the base of the tray by a set of four mortise and tenon joints **404** that are moulded into the base of the hybrid fiber management system **114** and which receive the bottom anterior or posterior mortise tenons 502, 504 (Fig. 3C) in a sliding fashion. The combination of the base joint 404 and the side joint 402 secures the first or leftmost rail structure in place, then each further rail structure 202 or 204 slots and locks into its neighbour to the left before the rightmost rail structure is locked into place in the anterior right groove 406 (Fig. 4D) as described further below.

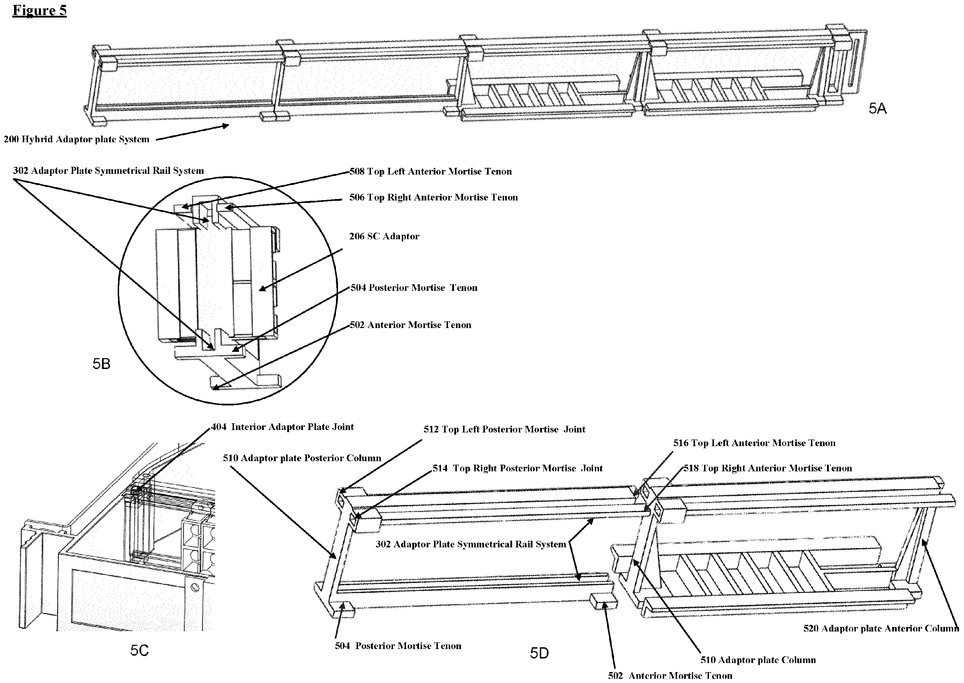

Referring additionally to Figs. 5A-5D, the fiber connector mounting rail structure **202** encompass two tenons, an elongated posterior mortise tenon **520** located at the bottom rear of the adaptor rail plate **202** and an elongated anterior mortise tenon **522** located at the bottom front of the fiber adaptor rail plate **202.** The mounting structure is in the form of a fence or a gate with the upright provided by a central adaptor plate column **510** on the left end, and with the rails being supported at the right end by the next structure in the modular arrangement. Two mortise tenon joints, a top-left posterior mortise joint **512** and a top-right posterior mortise tenon joint **514** make a connection (Fig. 5D) with the neighbouring structure which has corresponding receiving holes as shown. Thus, a primary rail structure mounts **202** into the interior adaptor plate joint **404.** A secondary rail structure **202** anchors into the primary with a mortise tenon joint system. The bridge-like structure offers support from the primary to the secondary and so on. The adaptor plate posterior column **510** reinforces the structural integrity. It offers an interlocking approach to secure a high density and interchangeable application between the termination of copper and fiber strands, with the user being able to choose the correct mix of electrical connector mounting rail structures and and fiber connector mounting rails structures as required for a given cabling and termination requirement.

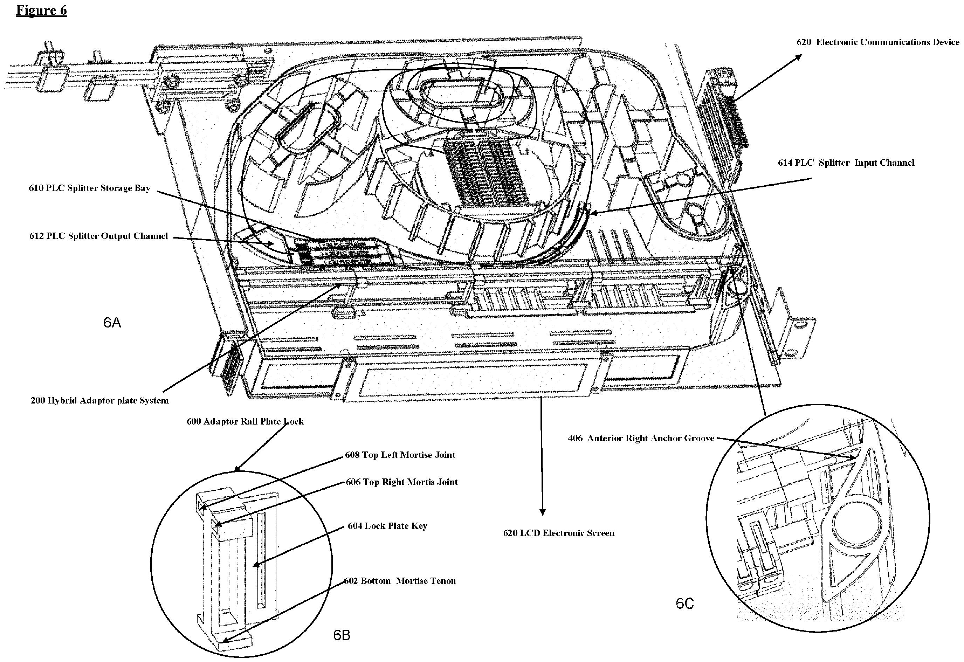

Referring to Figs. 4 and 6, the hybrid adaptor plate system **200** encompasses an adaptor rail lock **600,** best seen in Fig. 6B. The adaptor rail lock **600** comprises a bottom mortise tenon **602** at the base. At the posterior end is a lock plate key **604;** further at the anterior end there is a top-right mortise joint **606** and a top-left mortise joint **608.** The right anterior anchor groove **406** (Fig. 6C) establishes a keyhole for the lock plate key **604** to slot in securely, the mortise tenon joint **606** and **608** will lock into the final adaptor rail plate (electrical or fiber) to secure the modular adaptor rail plate system **200** to the tray.

also shown in Fig. 6A is a PLC splitter storage bay **610.** The splitter output channel **612** and a PLC splitter input channel **614** are integrally moulded into the hybrid fiber management system **114** interior **104.** The storage bay establishes an arrangement for three PLC splitters to be stored within the hybrid fiber management system. The PLC splitter bay **610** adds to the extensibility of the hybrid fiber management system **114,** allowing the user to accommodate more of the overall system requirements in one location and within the footprint of a 1U server rack space. Conventionally, a separate PLC splitter panel would have needed to be combined with a termination panel, and by including the splitter bay within the unit, this adds to the high-density appeal of the hybrid fiber management system **114.**

A planar waveguide circuit (PLC) splitter is placed into the plc splitter storage bay **610** with the input fiber strand routing via the PLC splitter input channel **614** in an anti-clockwise direction to the designated storage and termination location and the output fiber strands routing in an anti-clockwise direction via the PLC splitter output channel **612.** The circular routing in fiber strands offers much assistance in the ease of termination of the PLC splitters.

Furthermore, as best seen in Figs. 1 and 6, the hybrid fiber management system **114** includes an LCD electronic screen located at anterior front wall 118 and an electronic communications device **620** located at the posterior side wall **110.** The electronic system enables the operator to store local information about the terminations and provide them to a central server. The systems may include security embedded IOT so that the user is identified before the information is displayed. Traditionally an adaptor panel would not integrate communications and display devices. The invention solves a long-standing problem whereby information can be accessed on-demand and securely communicated to a central server.

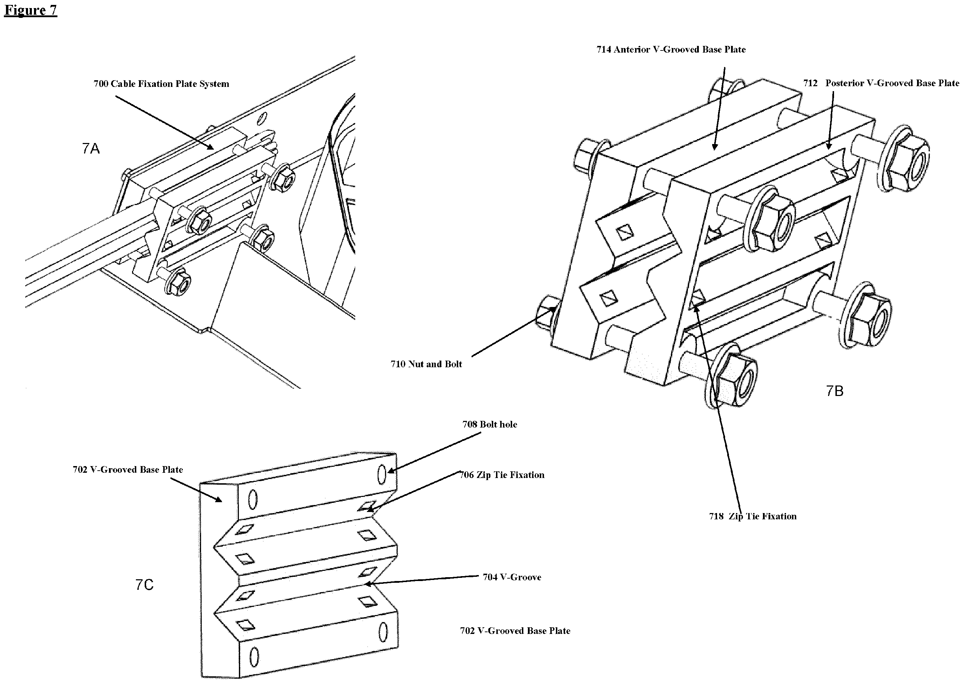

Referring to Fig. 7A, the HDF system 100 further includes a cable fixation plate system **700** which is seen isolated in Fig. 7B. The cable fixation plate system comprises a pair of symmetrical V-grooved base plates clamed together with four corner bolts. As seen in Fig. 7C, a single V-grooved base plate **702** comprises two v-grooved channels in symmetry with each other. The pair of opposed V-grooves in opposed plates accommodates various sized cable diameters. Furthermore, the V-grooved base plate **702** comprises eight zip tie cavities, each located on the anterior side of the V-groove **704.** A cable placed inside one of the V-grooves **704** of a first plate may be secured with a zip-tie through the zip-tie fixation cavity **706.** Then, the second V-grooved base plate **702** is mounted onto the four bolts which are secured together, acting as a vice to clamp the cable securely in position by tightening the four nuts. The V-grooved base plate **702** is designed for a second cable to be introduced later without any disruptions to the primary cable.

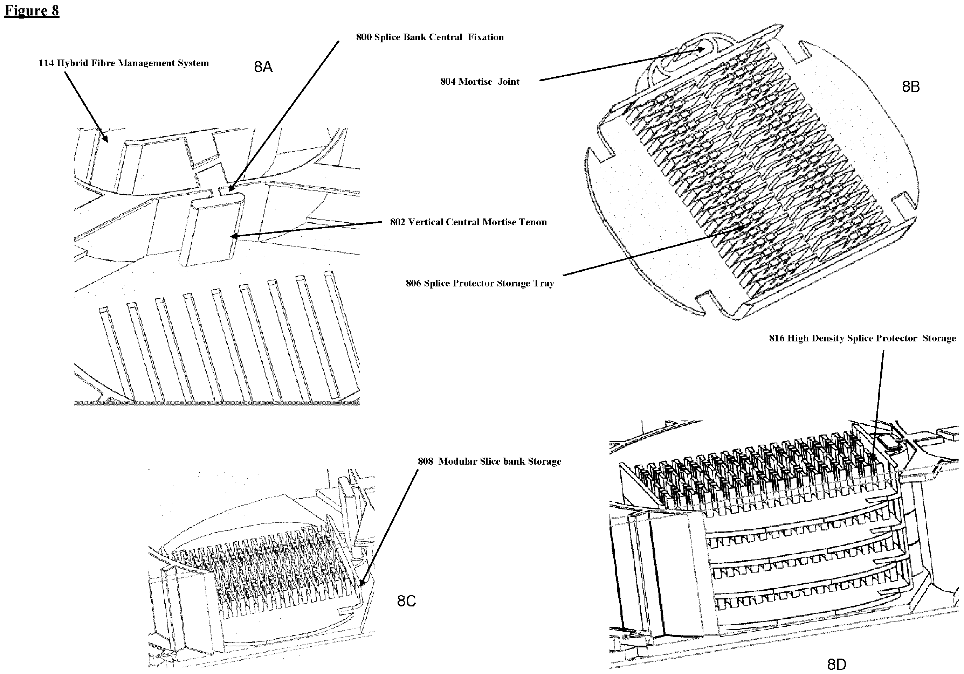

Referring to Figs. 8A-8D, the hybrid storage system **114** encompasses a splice bank. Fig. 8A shows the splice bank central fixation post **800**providing a vertical central mortise tenon **802.** The vertical central mortise tenon **802** receives a number of splice protector storage trays **806** stacked in a modular fashion utilizing a mortise joint **804** (Fig. 8B). Fig. 8C shows the first splice bank in place, while Fig. 8D shows four trays stacked together to form a high-density splice protector storage **816** system. Each splice protector storage tray **806** can store **32** splice protectors altogether. The splice bank central fixation **800** can thereby accommodate 144 single splice protectors in a 1U server rack application. The invention solves a traditional space problem in data centres. A 1U server rack space would conventionally accommodate an adaptor panel with 48 - 96 fiber connections. With the illustrated HDF system, **100,** 144 single fiber connections can be accommodated in a 1U server rack space with ease.

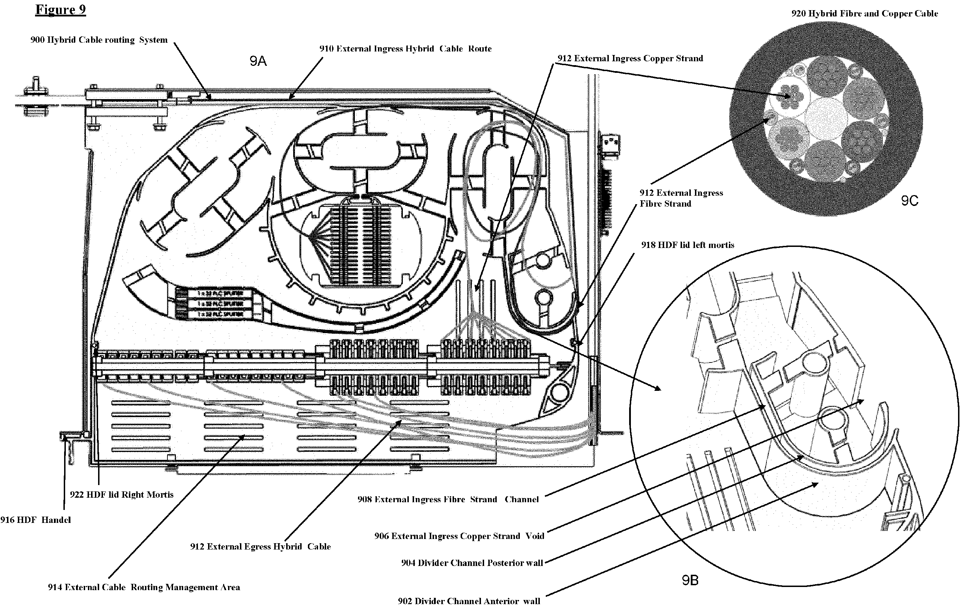

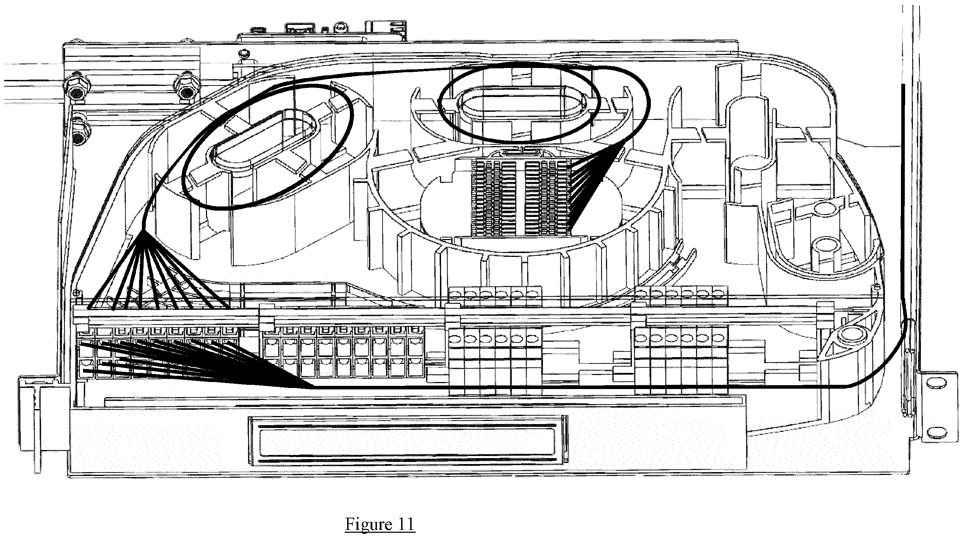

Referring to Figs. 9A and 9B, the hybrid cable routing system **900** has a divider channel anterior wall **902** and a divider channel posterior wall **904.** The system further comprises an external ingress copper strand void **906** and an external ingress fiber strand channel **908.** For the hybrid fiber and copper cable to be easily divided, the operative anterior end of the divider posterior wall **904** acts as a barrier between copper and fiber strands whereby the copper strand ingress is through the external ingress copper strand void **906.** The divider channel anterior wall **902** provides an external ingress fiber strand channel 908, allowing the fiber strands to be routed to their designated position. Figs. 11-13 provide further details of the routing of copper and fiber within the unit.

In order to understand the significance of the divider arrangement of Figs. 9A and 9B, reference is made to the construction of a typical hybrid fiber and copper cable **920** as illustrated in Fig. 9C. The fiber and copper strands are extruded linearly concentric around a central strength member, which as it can be appreciated conforms to the science of fiber cable constructions; however, this is unique to typical fiber cable constructions. The dividable cable system addresses the need for the fiber and copper strands to be separated without impendence. The external fiber ingress route **910** is made possible by the HDF handle **916** which acts as a stop to prevent the hybrid fiber management system **114** from pivoting back as fas as the interior rear wall. This leaves a void between the interior rear wall and the hybrid fiber management system **114** which provides a passage for the external ingress fiber cable route **910.**

With the external ingress cable route 910 now free from any interferences, the hybrid fiber management system **114** can swivel open and close with the fiber and copper strands secured in the external ingress fiber strand channel 908 and the ingress copper strand void **906.**

Referring to Figs. 10A and 10B, a lid or cover member **1001** is shown which can be applied to the HDF system 100 once all the cable has been placed into final position. The HDF lid **1001** is clipped into the fiber routing basket with an HDF lid left tenon **1002** and HDF lid right tenon **1005** located on each lateral end of the HDF lid **1001.** The mortise joint is symmetrically located on the hybrid fiber management system **114.**

Fig. 11 shows a perspective view of the HDF system 100 with an incoming fiber cable illustrated with heavy black lines. The incoming cable is split to reveal the individual fiber strands and these are accommodated in front of the adapter panel, where there is a void space behind the LCD screen, to allow a small amount of excess fiber to be stored (thereby easing the task of connecting up the incoming cable to the connectors on the adapter panel, considering that the incoming cable may have had connector ferrules attached and may not be precisely the correct length, so that excess fiber storage is beneficial). The incoming fibers are coupled to the external couplers of the fiber connectors, and within the enclosure's interior, a corresponding set of jumper optical fiber cables run from the internal couples of the connectors to a pir of fiber storage baskets (which can hold excess lengths of fiber) and from there to the splice bank. As is well known in the art, connections can be made at the splice bank to other fibers, leading to local communications equipment or to network connections.

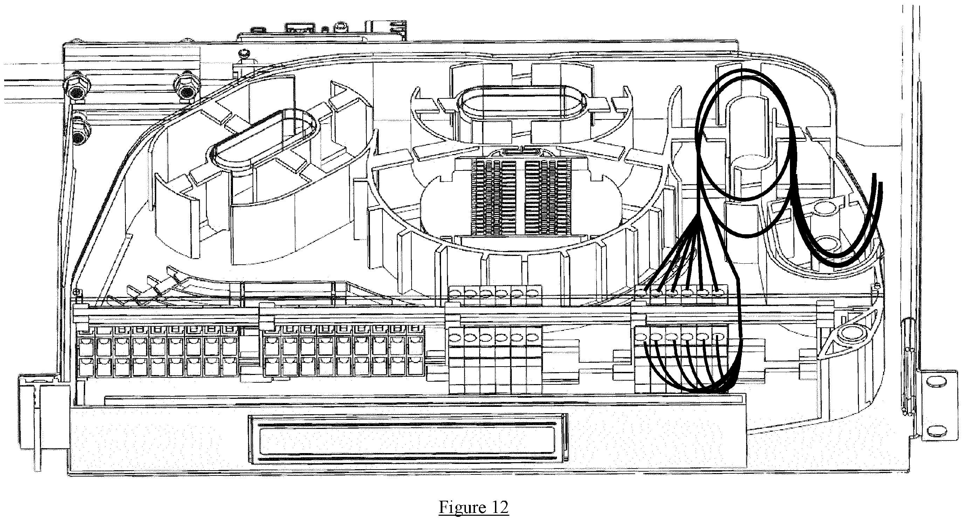

Fig. 12 shows a similar view, but of the copper (i.e. electrical) connections, these being shown in heavy black lines. The incoming individual conductors from the hybrid cable are separated and connected to the electrical connectors, allowing connection to be made to electrical conductors routed internally or routed to outbound local electrical connections.

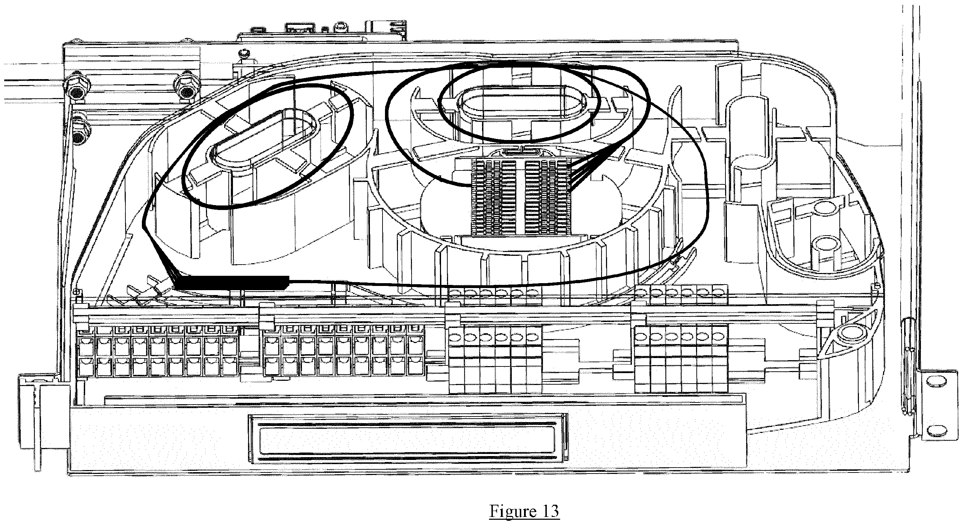

Fig. 13 shows the routing of fiber within the enclosure with storage in the storage baskets, with connections at the splice bank, and with routing to and from a planar waveguide splitter (PLC).

The following clauses set out preferred independent and dependent aspects of the invention for which claims may be made, it being understood that the claims of the application follow these clauses in the section entitled "Claims":
Clause 1. An optical fiber termination enclosure, comprising:
   a housing defining an internal space for accommodating a plurality of termination components adapted to terminate, connect, splice and/or split optical fiber connections received at said enclosure; and
   an adapter panel comprising a plurality of optical fiber connectors which each provide at least one optical connection between a respective external coupler and a respective internal coupler, whereby an external optical fiber may be mated to said external coupler and an internal optical fiber jumper cable having first and second ends may be mated to said internal coupler at the first end and to one of the termination components within the housing at the second end;
   wherein the adapter panel comprises an optical fiber connector mounting rail structure having at least one rail upon which the plurality of optical fiber connectors are slidably mounted in a side-by-side arrangement, such that individual connectors may be moved along the at least one rail to reveal spaces between adjacent connectors and thereby provide improved access to individual connectors.
Clause 2. An optical fiber termination enclosure according to clause 1, wherein the optical fiber connectors have height, a width and a depth, with the depth being defined by the direction from a front side to a rear side, wherein said external coupler is accessed from the front side and said internal coupler is accessed from the rear side; wherein the height is at least 1.5 times the width; and wherein the side-by-side arrangement of the connectors forms an array of connectors extending along the width axis.
Clause 3. An optical fiber termination enclosure according to clause 1 or 2, wherein the at least one rail has a cross-section that is complementary to a formation provided on each optical fiber connector, to enable the slidable mounting of the optical fiber connectors on the rail along the optical fiber connector mounting rail structure.
Clause 4. An optical fiber termination enclosure according to clause 3, wherein the at least one rail comprises a channel with an open side facing towards the optical fiber connectors.
Clause 5. An optical fiber termination enclosure according to clause 4, wherein the connectors are each provided a flange extending from the top or bottom which fits slidably within the channel.
Clause 6. An optical fiber termination enclosure according to any of clauses 2-5, wherein the optical fiber connector mounting rail structure of the adapter panel comprises a pair of spaced-apart top and bottom rails, and wherein the optical fiber connectors are provided with top and bottom formations which are complementary to the cross-sections of the top and bottom rails, respectively.
Clause 7. An optical fiber termination enclosure according to any preceding clause, wherein the optical fiber connector mounting rail structure defines a length within which the optical fiber connectors are accommodated and are free to slide, and wherein the combined width of the optical fiber connectors mounted side-by-side along the at least one rail is less than said length, thereby providing a free space along the at least one rail to enable separation between any two adjacent optical fiber connectors by sliding them apart.
Clause 8. An optical fiber termination enclosure according to clause 7, wherein the combined width of the optical fiber connectors mounted side-by-side along the at least one rail is less than said length by an amount at least equal to the width of a single optical fiber connector.
Clause 9. An optical fiber termination enclosure according to any preceding clause, wherein the adapter panel comprises a plurality of arrays of optical fiber connectors, each array of optical fiber connectors being mounted on a respective optical fiber connector mounting rail structure, and the respective optical fiber connector mounting rail structures being disposed with their respective rails aligned end-to-end.
Clause 10. An optical fiber termination enclosure according to clause 9, wherein the optical fiber connector mounting rail structures of adjacent arrays are provided with co-operating interconnections, such that a pair of said optical fiber connector mounting rail structures may be mounted end-to-end to form larger arrays of optical connectors in a modular fashion.
Clause 11. An optical fiber termination enclosure according to clause 10, wherein the adjacent rail structures lock one another into place.
Clause 12. An optical fiber termination enclosure according to any preceding clause, wherein the or each optical fiber connector mounting rail structure is removably mounted in the enclosure to permit removal and replacement thereof.
Clause 13. An optical fiber termination enclosure according to any preceding clause, wherein the adapter panel further comprises a plurality of electrical connectors which each provide at least one electrical connection between a respective external terminal and a respective internal terminal, whereby an external electrical conductor may be mated to said external terminal and an electrical jumper lead having first and second ends may be mated to said internal terminal at the first end and to an electrical termination component within the housing at the second end.
Clause 14. An optical fiber termination enclosure according to clause 13, wherein the adapter panel comprises at least one electrical connector mounting rail structure having at least one rail upon which the plurality of electrical connectors are slidably mounted in a side-by-side arrangement, such that individual connectors may be moved along the at least one rail to reveal spaces between adjacent connectors and thereby provide improved access to individual connectors.
Clause 15. An optical fiber termination enclosure according to clause 14, wherein said optical fiber connector mounting rail structure and said electrical connector mounting rail structure are mounted in the enclosure in an aligned end-to-end arrangement to form an array of optical fiber connectors and electrical connectors adapted to accommodate hybrid optical-electrical cables received at the enclosure.
Clause 16. An optical fiber termination enclosure according to any of clauses 13-15, wherein the at least one rail of the electrical connector mounting rail structure has a cross-section that is complementary to a formation provided on each electrical connector, to enable the slidable mounting of the electrical connectors on the rail along the electrical connector mounting rail structure.
Clause 17. An optical fiber termination enclosure according to clause 16, wherein the electrical connector mounting rail structure of the adapter panel comprises a pair of spaced-apart top and bottom rails, and wherein the electrical connectors are provided with top and bottom formations which are complementary to the cross-sections of the top and bottom rails, respectively.
Clause 18. An optical fiber termination enclosure according to any of clauses 13-17, wherein the electrical connector mounting rail structure defines a length within which the electrical connectors are accommodated and are free to slide, and wherein the combined width of the electrical connectors mounted side-by-side along the at least one rail is less than said length, thereby providing a free space along the at least one rail to enable separation between any two adjacent electrical connectors by sliding them apart.
Clause 19. An optical fiber termination enclosure according to clause 18, wherein the combined width of the electrical connectors mounted side-by-side along the at least one rail is less than said length by an amount at least equal to the width of a single electrical connector.
Clause 20. An optical fiber termination enclosure according to any of clauses 13-19, wherein the adapter panel comprises a plurality of arrays of electrical connectors, each array of electrical connectors being mounted on a respective electrical connector mounting rail structure, and the respective electrical connector mounting rail structures being disposed with their respective rails aligned end-to-end.
Clause 21. An optical fiber termination enclosure according to clause 20, wherein the electrical connector mounting rail structures of adjacent arrays are provided with co-operating interconnections, such that a pair of said electrical connector mounting rail structures may be mounted end-to-end to form larger arrays of electrical connectors in a modular fashion.
Clause 22. An optical fiber termination enclosure according to any of clauses 13-21, wherein the or each electrical connector mounting rail structure is removably mounted in the enclosure to permit removal and replacement thereof.
Clause 23. An optical fiber termination enclosure according to any of clauses 13-22, further comprising one or more mounting structures to which said optical fiber connector mounting rail structure(s) and said electrical connector mounting rail structures can interchangeably mount.
Clause 24. An optical fiber termination enclosure according to any preceding clause, wherein at least one of said optical fiber connectors is provided with a plurality of communicating pairs of external and internal couplers to thereby facilitate the connection of a plurality of external optical fibers with a plurality of optical fiber jumper cables.
Clause 25. An optical fiber termination enclosure according to any of clauses 13-23, wherein at least one of said electrical connectors is provided with a plurality of communicating pairs of external and internal terminals to thereby facilitate the connection of a plurality of external electrical conductors with a plurality of internal electrical jumper leads.
Clause 26. An optical fiber termination enclosure according to any preceding clause, wherein said enclosure has a front wall, and said adapter panel is disposed internally of the enclosure behind said front wall and spaced apart therefrom to define a routing space which is adapted to accommodate portions of said external optical fibers adjacent to the terminal ends mated to the external couplers.
Clause 27. An optical fiber termination enclosure according to clause 26, further comprising a display provided at said front wall, the display communicating with and providing information relating to the operation of components mounted within said enclosure.
Clause 28. An optical fiber termination enclosure according to any preceding clause, further comprising a first cable port adapted to receive an optical fiber cable containing said external optical fibers bundled together, optionally in the form of a hybrid cable containing said external optical fibers and electrical conductors.
Clause 29. An optical fiber termination enclosure according to clause 28, further comprising a routing structure providing a routing path from said ingress port to said external couplers of said adapter panel.
Clause 30. An optical fiber termination enclosure according to clause 28 or 29, further comprising an second cable port adapted to receive a further optical fiber cable containing a bundle of optical fibers which are connected directly or indirectly to said termination components.
Clause 31. An optical fiber termination enclosure according to any preceding clause, wherein the termination components and the adapter panel are mounted on a tray which is moveably accommodated within the housing of the enclosure.
Clause 32. An optical fiber termination enclosure according to clause 31, wherein the tray is pivotally mounted to the housing, permitting it to be rotated away from the housing to facilitate access to the adapter panel for installation or maintenance, and permitting it to be rotated back into and enclosed within the housing for normal operation.
Clause 33. An optical fiber termination enclosure according to clause 32, wherein the tray is slidably received in the housing allowing it to be slid out of the housing to facilitate access to the adapter panel for installation or maintenance, and permitting it to be slid back into and enclosed within the housing for normal operation.

## Claims

1. An optical fiber termination enclosure, comprising:
a housing defining an internal space for accommodating a plurality of termination components adapted to terminate, connect, splice and/or split optical fiber connections received at said enclosure; and
an adapter panel comprising a plurality of optical fiber connectors which each provide at least one optical connection between a respective external coupler and a respective internal coupler, whereby an external optical fiber may be mated to said external coupler and an internal optical fiber jumper cable having first and second ends may be mated to said internal coupler at the first end and to one of the termination components within the housing at the second end;
wherein the adapter panel comprises an optical fiber connector mounting rail structure having at least one rail upon which the plurality of optical fiber connectors are slidably mounted in a side-by-side arrangement, such that individual connectors may be moved along the at least one rail to reveal spaces between adjacent connectors and thereby provide improved access to individual connectors.

2. An optical fiber termination enclosure according to claim 1, wherein the at least one rail has a cross-section that is complementary to a formation provided on each optical fiber connector, to enable the slidable mounting of the optical fiber connectors on the rail along the optical fiber connector mounting rail structure.

3. An optical fiber termination enclosure according to claim 1 or 2, wherein the optical fiber connector mounting rail structure of the adapter panel comprises a pair of spaced-apart top and bottom rails, and wherein the optical fiber connectors are provided with top and bottom formations which are complementary to the cross-sections of the top and bottom rails, respectively.

4. An optical fiber termination enclosure according to any preceding claim, wherein the optical fiber connector mounting rail structure defines a length within which the optical fiber connectors are accommodated and are free to slide, and wherein the combined width of the optical fiber connectors mounted side-by-side along the at least one rail is less than said length, thereby providing a free space along the at least one rail to enable separation between any two adjacent optical fiber connectors by sliding them apart.

5. An optical fiber termination enclosure according to any preceding claim, wherein the adapter panel comprises a plurality of arrays of optical fiber connectors, each array of optical fiber connectors being mounted on a respective optical fiber connector mounting rail structure, and the respective optical fiber connector mounting rail structures being disposed with their respective rails aligned end-to-end.

6. An optical fiber termination enclosure according to claim 5, wherein the optical fiber connector mounting rail structures of adjacent arrays are provided with co-operating interconnections, such that a pair of said optical fiber connector mounting rail structures may be mounted end-to-end to form larger arrays of optical connectors in a modular fashion.

7. An optical fiber termination enclosure according to any preceding claim, wherein the adapter panel further comprises a plurality of electrical connectors which each provide at least one electrical connection between a respective external terminal and a respective internal terminal, whereby an external electrical conductor may be mated to said external terminal and an electrical jumper lead having first and second ends may be mated to said internal terminal at the first end and to an electrical termination component within the housing at the second end.

8. An optical fiber termination enclosure according to claim 7, wherein the adapter panel comprises at least one electrical connector mounting rail structure having at least one rail upon which the plurality of electrical connectors are slidably mounted in a side-by-side arrangement, such that individual connectors may be moved along the at least one rail to reveal spaces between adjacent connectors and thereby provide improved access to individual connectors.

9. An optical fiber termination enclosure according to claim 8, wherein said optical fiber connector mounting rail structure and said electrical connector mounting rail structure are mounted in the enclosure in an aligned end-to-end arrangement to form an array of optical fiber connectors and electrical connectors adapted to accommodate hybrid optical-electrical cables received at the enclosure.

10. An optical fiber termination enclosure according to any of claims 7-9, wherein the electrical connector mounting rail structure defines a length within which the electrical connectors are accommodated and are free to slide, and wherein the combined width of the electrical connectors mounted side-by-side along the at least one rail is less than said length, thereby providing a free space along the at least one rail to enable separation between any two adjacent electrical connectors by sliding them apart.

11. An optical fiber termination enclosure according to any of claims 7-10, further comprising one or more mounting structures to which said optical fiber connector mounting rail structure(s) and said electrical connector mounting rail structures can interchangeably mount.

12. An optical fiber termination enclosure according to any preceding claim, wherein at least one of said optical fiber connectors is provided with a plurality of communicating pairs of external and internal couplers to thereby facilitate the connection of a plurality of external optical fibers with a plurality of optical fiber jumper cables.

13. An optical fiber termination enclosure according to any preceding claim, wherein said enclosure has a front wall, and said adapter panel is disposed internally of the enclosure behind said front wall and spaced apart therefrom to define a routing space which is adapted to accommodate portions of said external optical fibers adjacent to the terminal ends mated to the external couplers.

14. An optical fiber termination enclosure according to claim 13, further comprising a display provided at said front wall, the display communicating with and providing information relating to the operation of components mounted within said enclosure.

15. An optical fiber termination enclosure according to any preceding claim, wherein the termination components and the adapter panel are mounted on a tray which is moveably accommodated within the housing of the enclosure.
